# EUROPEAN PATENT SPECIFICATION

(11) **EP 2 741 884 B1**
(45) Date of publication and mention of the grant of the patent: **12.04.2017**
(21) Application number: 12762063.1
(22) Date of filing: 03.08.2012
(51) Int. Cl.: B23D 57/00, B28D 1/08

(54) **MACHINE FOR CUTTING BLOCKS OF STONE MATERIAL INTO SLABS**
MASCHINE ZUM SCHNEIDEN VON STEINBLÖCKEN IN PLATTEN
MACHINE POUR LA COUPE DE BLOCS DE MATERIAUX PIERREUX EN DALLES

(30) Priority: 10.08.2011 IT TV20110116
(43) Date of publication of application: 18.06.2014
(73) Proprietor: Toncelli, Luca, 36061 Bassano del Grappa (Vicenza) (IT)
(72) Inventor: Toncelli, Luca, 36061 Bassano del Grappa (Vicenza) (IT)
(74) Representative: Dragotti, Gianfranco
(86) International application number: PCT/IB2012/053987
(87) International publication number: WO 2013/021327

(56) References cited:
- EP-A1- 2 110 216
- WO-A1-00/05021
- WO-A1-2007/036784
- CN-Y- 2 579 634
- DE-A1- 3 532 717

## Description

The present invention relates to a machine for cutting blocks of stone material, in particular granite, into slabs according to the preamble of claim 1.

In particular, the present invention relates to machines in which cutting is performed by means of diamond wires. Such a machine is known from WO 2007/036784 A1. Known machines consist of single-wire machines, i.e. machines
with a single diamond wire, and multi-wire machines, i.e. machines with several wires (the simplest having 6-8 wires and the most complex having up 80 wires or more).

The diamond wire is an endless steel cable along which cylindrical diamond beads suitable for cutting stone materials, such as granite or marble, are arranged at regular distances. Tubular plastic elements rigidly attached to the cable have the function of fixing the beads to the cable, keeping them spaced and preventing them from rotating about the cable itself. Usually the cables have a diameter of about 3.0-3.5 mm and the beads a diameter of 6-7 mm with a length of about 8-10 mm.

The existing machines have a similar supporting structure, consisting essentially of a gantry composed of two or four columns which are joined together at the top by a connecting cross-piece. Slides carrying pulleys, at least two for each wire, consisting of a driving pulley and a driven pulley around which the diamond wires are wound, travel in synchronism along the columns.

The block to be cut is positioned between the columns and the cut is performed by gradually lowering in synchronism the slides with the pulleys and therefore the diamond wires. The distance between the bottom section of the wire, which forms the cutting section, and the top section is greater than the height of the block to be cut by a few tens of centimetres. The diamond wires are kept lubricated and cooled by means of the water jets which penetrate into the recess formed by the wires during cutting; in this connection the machines may be provided with a spray irrigation system positioned above the block to be cut.

In other machines the pulleys and the wires remain at a set height and the cutting action is performed by means of raising of the block.

In order to perform the cut, the wires must be kept tensioned and the required tension for each wire is normally variable between 100 and 400 kg depending on the type of wire and stone. The value of the design tension must however be substantially the same on all the wires so as not to adversely affect the cutting operation.

Each wire must, however, be necessarily kept tensioned independently of all the other wires. In fact, owing to the inevitable, albeit it minor, differences in length between the wires, it is not possible to use a single tensioning system in order to tension simultaneously all the wires.

In fact, using a single tensioning unit, the shorter wires would be tensioned with a greater tensile force, while the longer wires would be kept tensioned with a lower tension which would be insufficient.

A second aspect relates to the different wear of the grooves of the pulleys which seat the wires. In fact, the diameter around which the wire is actually wound, and therefore the winding length of the wire around the pulleys, is slightly different. Therefore, similar to that indicated above, using a single tensioning system, there would be different tensions between any two wires. Moreover, as mentioned above, the diameter with which the wires are wound around the individual driven pulleys may vary and, considering that the speed of movement of the wires is substantially the same, the pulleys may rotate at an angular speed which is slightly different from each other.

It is therefore necessary to have as many mutually independent tensioning devices as there are number of machine wires and it is also necessary to mount the individual driven pulleys on a spindle independently of each other (for example by means of ball or roller bearings) so that they are able to rotate at different angular speeds.

In addition to the driven pulleys, the transmission or support pulleys are formed in the same way, namely by providing a plurality of independent pulleys each mounted with its associated bearing on the spindle of the transmission or support pulley.

A first type of machine known from the present state of the art consists in a general design of the single-wire machines, namely a machine consisting of as many pairs of pulleys or sets of four pulleys as there are diamond wires, each carrying a diamond wire and provided with its own pneumatic or hydraulic tensioning system. These machines, although efficient, nevertheless have a technological limitation due to the size of the tensioning devices of each wire, so that normally they are fitted with not more than about 6-8 wires. In fact, between the various wires there must be a sufficient distance to receive these devices, so that the minimum distance between the wires and consequently the minimum thickness of the cut slabs is 6-8 cm. These machines are equipped with fairly complex and costly devices for varying the relative distance of the pulleys and the associated tensioning systems, so as to be able to vary the thickness of the slabs obtained, which operation is however laborious and time-consuming.

International patent application WO 03/004235 in the name of CO.FI.PLAST Srl describes the use of a series of large-diameter driving pulleys equal to the number of wires (up to 30) arranged alongside each other with a distance between the grooves of 3 or 4 cm on one side, while at the opposite end there are as many small-diameter idle pulleys as there are wires. Each wire is wound around a large-diameter driving pulley and, at the opposite end, around a small-diameter idle pulley. The small-diameter idle pulleys are positioned at a considerable distance (about 25-30 m) from the respective large-diameter driving pulley, so that they may be arranged at different heights and separated from each other by a few centimetres. In this way, sufficient spaces are created to house the separate tensioning units between the idle pulleys. This type of machine, however, has the drawback of having a considerable volume which requires a lot of space to house it; and also the significant length of the wires results in a considerable economic outlay.

There also exist machines which have two small-size driven pulleys between which a tensioning system with transmission rollers, which adjusts the tension of each wire, is arranged.

There also exists a variant of this latter type where a smaller-size driving pulley and a tensioning pulley which is also small-size are used instead of a large-size driving pulley. The four pulleys are arranged at the four vertices of a quadrilateral. Firstly the position of the tensioning pulley is adjusted so that all the wires are tensioned in the same way and then, using the tensioning device, each wire is tensioned to the desired value. It is also possible to provide a second tensioning device between driving pulley and tensioning pulley.

Some examples of the configuration of frames are described:
- in Spanish patents ES 2167228 and ES 2188362 in the name of Bidese;
- in international patent application WO 0005021 in the name of Micheletti; and
- in Italian patent application VR1990A084958 in the name of Pellegrini.

Another type of frame is that described in Italian patent application TV2006A000060 in the name of Luca Toncelli filed on 4.4.2006 in which each wire engages with a pair or a set of four pulleys, and tensioning jockey wheels which are suitably staggered and spaced are provided on the top side of each wire.

The prior art, however, is not without drawbacks. For example, all these frames essentially envisage a multiple-groove driving pulley (or in any case a series of adjacent pulleys connected together and all rigidly keyed onto the driving shaft) and various idle pulleys (driven, transmission or support pulleys) consisting of a plurality of pulleys mounted on a fixed spindle independently via respective rolling bearings.

It may be easily understood that, in the event of failure or wear of the rolling bearings, the disassembly operations for repair and the subsequent reassembly operations are long and laborious and therefore particularly costly. Moreover, a large number of bearings is required to construct the machine and consequently the construction time and the final cost of such a frame is considerable.

Owing to the wear, the bearings develop play such that the individual pulleys tend to wobble, namely oscillate in the axial direction. In view of the considerable forces which are involved, even a minimum oscillation of the pulleys negatively affects correct operation. With time the oscillations increase more and more until they generate malfunctions which in a short period of time damage, also irreparably, the entire pulley, thereby negatively affecting the cutting quality.

The object of the invention is therefore to solve the drawbacks of the prior art by providing a multi-wire machine suitable for cutting thin slabs, namely with a thickness of 2 or 3 cm, which is simple, inexpensive, extremely reliable and requires little maintenance so that, in the event of faults or malfunction, the intervention or repair time is reduced to a minimum.

In view of this object the idea which has occurred is to provide a machine for cutting blocks of stone material into slabs by means of cutting wires according to claim 1.

Moreover it has been thought to use a particular system for mounting the driven pulleys on the shaft, of the sliding bearing type or friction (slip torque) bearing type, instead of rolling bearings.

The characteristic features and advantages of the machine designed by applying the principles of the invention will emerge more clearly from the description below of a number of examples of embodiment provided by way of a non-limiting example with reference to the accompanying drawings in which:
Figure 1 shows in schematic form a machine according to the present invention;
Figure 2 shows in schematic form a motor-driven projecting shaft on which a plurality of driven pulleys are mounted, according to the present invention;
Figure 3 shows in schematic form a part of the motor-driven shaft shown in Figure 2.
Figure 4 shows an enlarged view of the detail A of Figure 3;
Figure 5 shows in schematic form an alternative embodiment of the motor-driven shaft shown in Figure 3;
Figure 6 shows in schematic form an alternative embodiment of the machine for cutting blocks of stone material according to the present invention into slabs;
Figure 7 shows in schematic form an alternative embodiment of a machine for cutting blocks of stone material into slabs according to the present invention;
Figure 8 shows in schematic form a variation of the invention which envisages the use of rolling bearings; and
Figure 9 shows an enlarged view of the detail B of Figure 8.

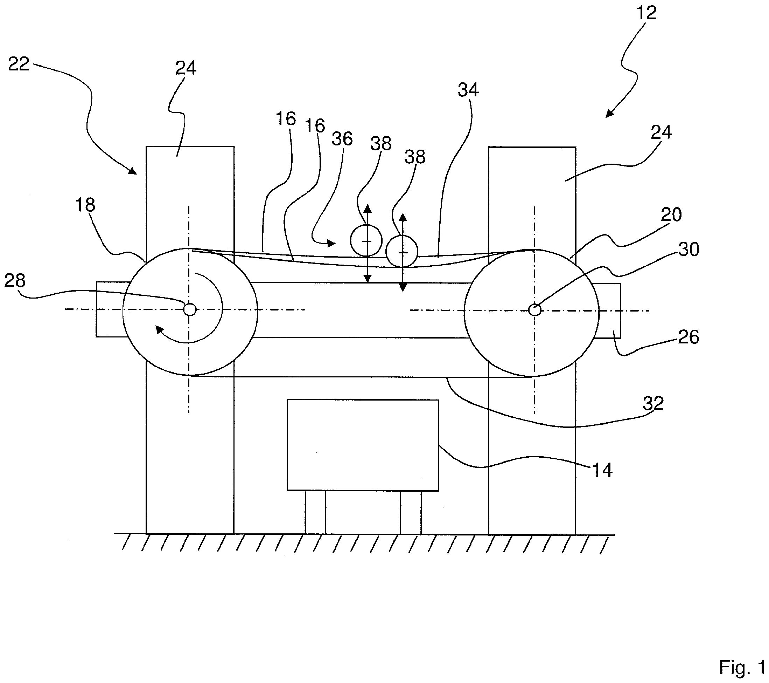

In figure 1 it is showed a machine 12 for cutting blocks of stone material 14 into slabs by means of a plurality of diamond wires 16. The machine has a frame 22 comprising a fixed part 24 and a movable part 26 along the cut feeding direction so that there is a relative movement of the block 14 being sawn and the plurality of diamond wires 16. In the embodiment shown in Figure 1, the fixed part of the frame 22 comprises two columns 24, while the movable part comprises the cross-piece 26 connected so that it can be moved along the cut feeding direction.

In accordance with alternative embodiments of the present invention means may be provided for moving the block 14 in the cut feeding direction towards the diamond wires 16.

Sets of pulleys 18, 20 are connected to the cross-piece and have, wound around them, in a manner known per se, a plurality of closed loop diamond wires 16.

With reference to the embodiment shown in Figure 1, the sets of pulleys 18, 20 comprise:
- a set of driving pulleys 18 rigidly keyed onto a first driving shaft 28 connected in a manner known per se to first motor means (not shown); and
- at least one set of driven pulleys 20 mounted idle on a shaft 30.

The set of driving pulleys 18 may consist of a plurality of pulleys 18 which are rigidly fixed to the driving shaft 28 or, alternatively, a single pulley 18 provided with a plurality of grooves.

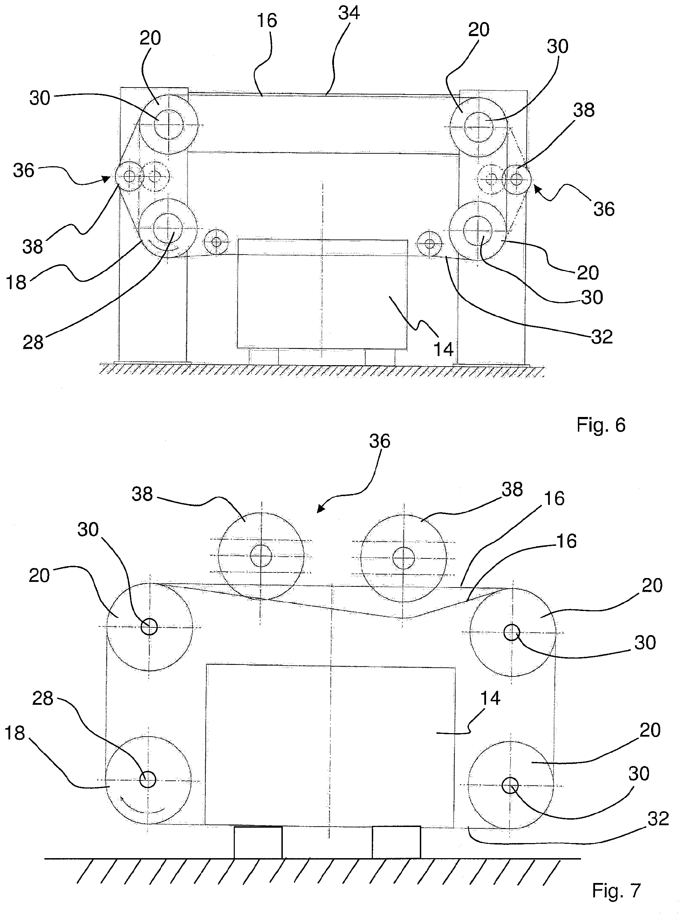

The sets of driven pulleys 20 may be one, as in the embodiment shown in Figure 1, or, according to alternative embodiments shown for example in Figures 6 and 7, a plurality of driven pulleys 20, for example three pulleys, may be provided. However, the present invention is applicable, in the manner which will become clear below, also to complex machines in which there is a plurality of sets of driven pulleys 20, whether they be support pulleys or transmission pulleys.

According to the invention, the shaft 30 on which the driven pulleys 20 are mounted is connected to second motor means 40 so as to rotate in the same direction as rotation of the pulleys 20.

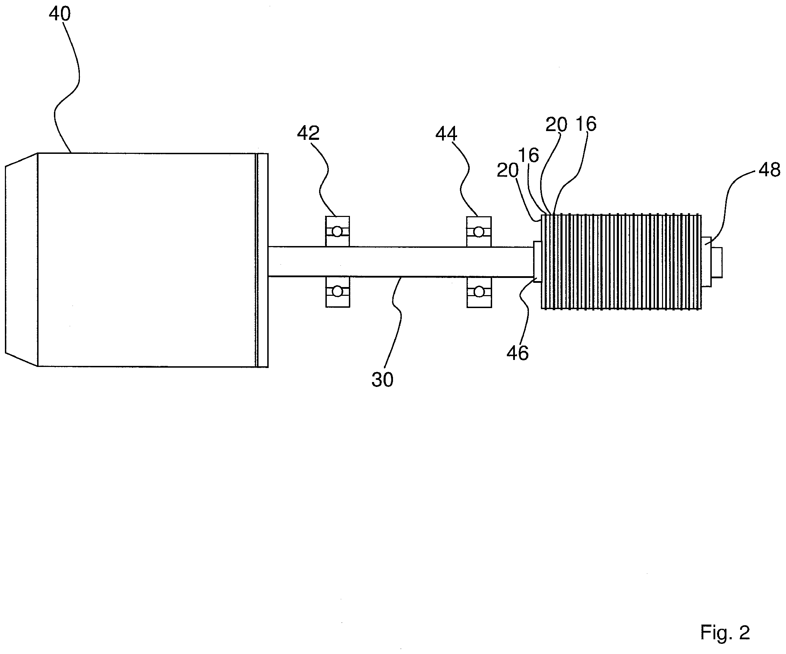

According to a possible embodiment of the present invention, shown schematically in Figure 2, the second motor means comprise an electric motor 40 for the shaft 30 of each at least one set of driven pulleys 20.

Advantageously the first motor means and the second motor means 40 may coincide so that it is possible to use the power supplied by a single motor in order to move both the first shaft 28 and the at least one second shaft 30. The movement may be transferred in a manner known per se by means of belt drives, chain drives, etc.

According to a possible embodiment of the present invention, one of the driven pulleys 20 of each set of driven pulleys 20 may be keyed in a non-displaceable manner on the associated shaft 30 to which it therefore transfers the rotational movement. In this case, the diamond wire 16 acts as a member for transmission of the movement between the first shaft 28 and the at least one second shaft 30.

Intermediate solutions may also be envisaged where the first shaft 28 is connected to an independent motor, while the second shafts 30 are connected to another motor, via belt drives, chain drives, etc.

Advantageously embodiments may also be provided where the shafts of two sets of driven pulleys 20 are connected and receive the movement from a single motor 40.

According to a possible embodiment of the present invention, the shafts of each set of driven pulleys 20 which are mounted on the same column 24 are connected and receive the movement from a single motor 40.

In the embodiment showed in Figure 2 it is depicted a motor-driven shaft 30 which is mounted projecting and supported by a pair of bearings 42, 44 and at one end of which an electric motor 40 is connected, while at the other end the single driven pulleys 20 are inserted and fixed in a manner known per se by means of stops 46, 48.

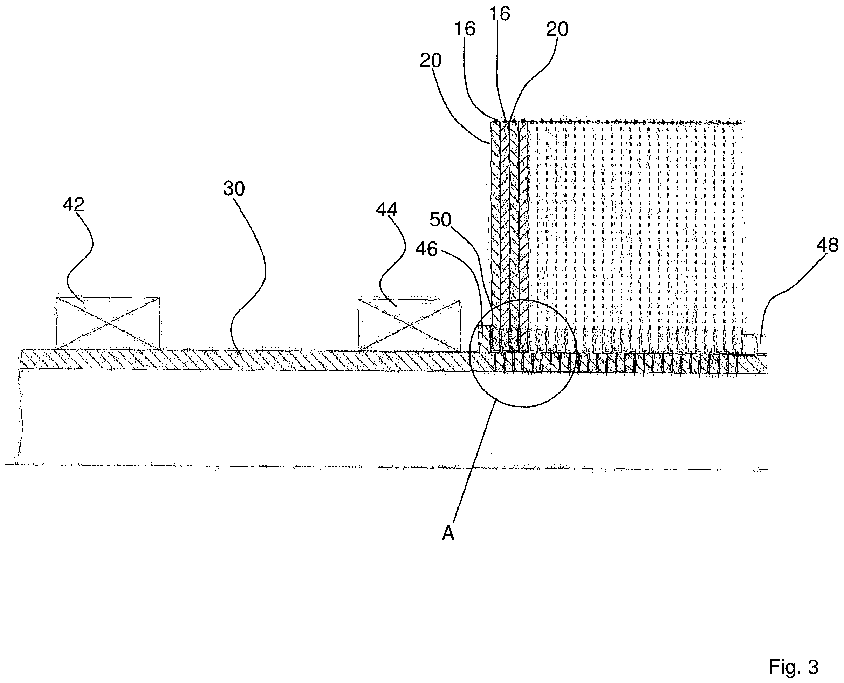

As can be seen from Figure 3, which shows an enlarged view of the end of the shaft 30 to which the pulleys 20 are connected, each single pulley 20 is advantageously mounted on the motor-driven shaft 30 via a sliding bearing or friction (slip torque) bearing 50 so as to form a friction connection between the single pulley 20 and shaft 30.

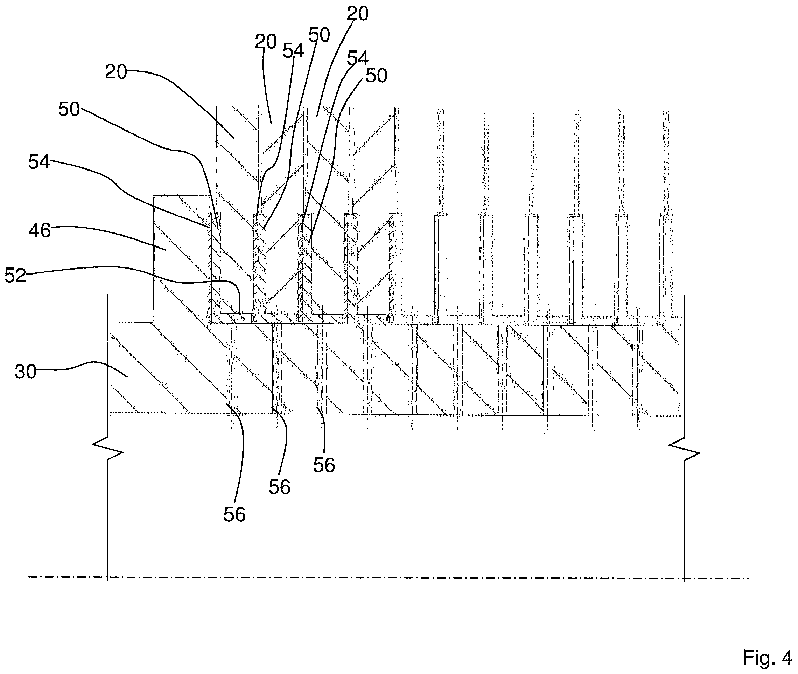

As can be clearly seen from the detail A of Figure 3 shown enlarged in Figure 4, according to a possible embodiment of the present invention, the sliding bearing 50 has an L-shaped radial cross-section and is made of self-lubricating and anti-wear material; advantageously a plastic material, such as polytetrafluoroethylene (PTFE), commonly called TEFLON^{®} (trademark of Dupont) or polyamide, commonly called Nylon^{®} (trademark of Dupont), may be used. The sliding bearing 50 is rigidly fixed (keyed) onto the hubs 52 of each single pulley 20 and is then mounted on the shaft 30.

The shaft 30 is adapted to be rotated at a speed such that the peripheral speed of the single pulleys 20 is substantially the same as the travel speed of the diamond wires 16. As already described above, the angular speeds of the single pulleys 20 may differ slightly from each other, but owing to the arrangement of a sliding bearing 50 between pulley 20 and shaft 30, each pulley 20 may slide with respect to the shaft 30 and therefore adapt its rotational speed to that which is actually required.

The speed adaptation is, however, very small since the pulleys 20 are all rotated at a speed which coincides with that required or differs from it only very slightly.

Between a driven pulley 20 and the next pulley it is advantageously interposed an annular element 54, made of hard material, for example steel, the function of which is to protect the vertical side of the sliding bearing 50, which otherwise would come into direct contact with the pulley 20.

According to a possible embodiment of the present invention, the shaft 30 is hollow and provided with radial holes 56 through which lubricating fluid is conveyed so as to lubricate the sliding bearing 50.

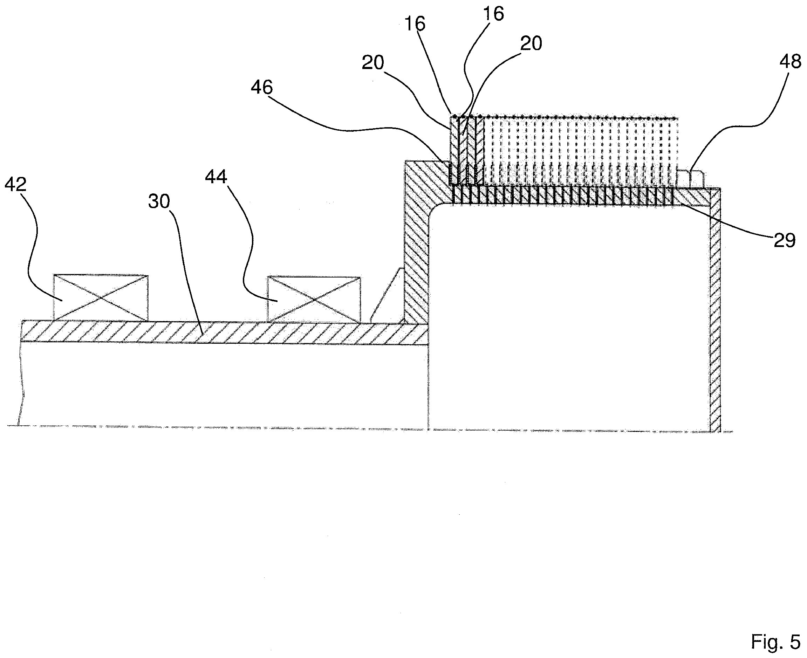

Figure 5 shows an advantageous variation of the motor-driven shaft 30, where the shaft section 29 on which sliding bearings 50 and therefore the driven pulleys 20 are mounted has a greater diameter than the rest of the shaft 30. In this way advantageously driven pulleys 20 with the same external diameter, but an internal diameter which is decidedly larger, may be used. Although the cost of the sliding bearings 50 increases because they have larger dimensions, the overall cost of this solution is lower.

The most important advantage, however, is due to the fact that, since the difference between external radius and internal radius of the driven pulleys 20 is small, the wobble affecting them during operation of the machine 12 is fairly limited in nature. This means that it is possible to obtain cuts which are decidedly more precise and therefore slabs with more regular cut surfaces.

The technological solution described may be adopted in all the machines of the prior art in which there is at least one pulley consisting of a plurality of pulleys mounted on respective bearings and therefore essentially in all the frame configurations of the prior art described above. In particular, also in machines which have sets of driven pulleys 20 which may be displaced so as to apply a greater tension to the diamond wires 16.

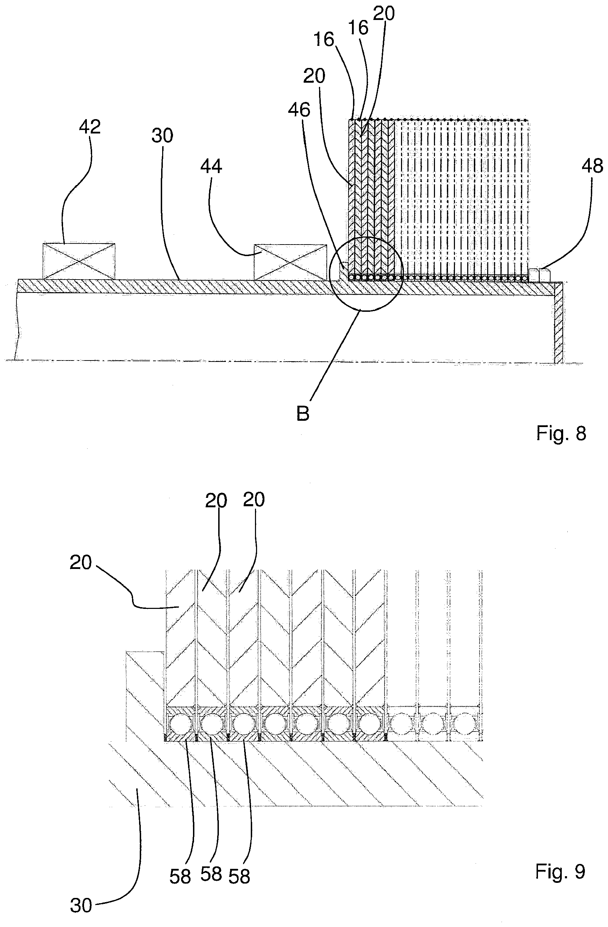

In figures 8 and 9 it is showed a variation of the invention in which rolling bearings 58 are provided instead of sliding bearings.

In particular, it is showed a motor-driven shaft 30 which is supported projecting by a pair of bearings 42, 44 and on a free end of which a plurality of bearings 50 each carrying a pulley 20 are mounted.

It should be noted that a solution with rolling (ball or roller) bearings nevertheless offers advantages compared to the prior art. In fact, owing to the fact that the bearings are no longer mounted on a fixed spindle but on a rotating (motor-driven) shaft, the bearings in practice do not rotate with respect to the shaft or in any case rotate at very low speeds. Therefore they are not subject to the same degree of wear to which the bearings with a fixed spindle are subject: since they are less stressed, they have a greater duration than the bearings mounted in the frames of the prior art so that replacement thereof is performed less frequently with consequent advantages in terms of both cost and machine downtime.

In the machines of the prior art the total number of bearings used is very high (usually between 100 and 200) so that the replacement of these bearings in the event of wear gives rise to considerable costs. Therefore, owing to driving of the driven-pulley shaft by means of a motor, wear of the bearings, whether they be of the sliding type or rolling type, is limited and therefore the cost of maintenance of the machine is significantly reduced.

Considering also that sliding bearings are less subject to wear than rolling bearings, and therefore have a longer working life, the machine is more reliable and the maintenance operations limited. For the same reasons, the machine operates more smoothly and the so-called wobble effect of the single pulleys is significantly reduced, thus helping increase the reliability of the machine.

The machine 12, in a manner known per se, comprises means 36 suitable for varying the tension of each cutting wire 16, independently of each other. At any one moment during operation it is possible to define on the diamond wires 16 a working section 32 which, during operation, performs cutting of the block 14 of stone material, and a return section 34 which does not perform cutting.

In the embodiment shown in Figure 1, the means 36 suitable for varying the tension of each wire 16 comprise idle pulleys 38 over which the diamond wires 16 travel. The pulleys 38 are designed to move along the cutting direction in such a way as to increase or reduce the tension of the diamond wires 16. The same tensioning system may also be applied to more complex machines 12, i.e. those equipped with several sets of driven pulleys 20, such as those shown in Figures 6 and 7.

With regard to the embodiments described above, the person skilled in the art may, in order to satisfy specific requirements, make modifications to and/or replace elements described with equivalent elements, without thereby departing from the scope of the accompanying claims.

## Claims

1. Machine (12) for cutting blocks of stone material (14) into slabs by means of cutting wires (16) comprising:
- a frame (22) on which the following elements are rotatably mounted:
a set of driving pulleys (18) rotated by first motor means, at least one set of driven pulleys (20) mounted on a shaft (30), said set of driven pulleys (20) comprising driven or idle pulleys (20) mounted independently and rotatably on said shaft (30), by means of sliding bearings, friction bearings, or rolling bearings,
- cutting wires (16)
- means (36) for varying the tension of each cutting wire (16), comprising idle pulleys (38) over which the cutting wires (16) travel; and
- means for producing a relative movement between the block and the cutting wires (16), in the cut feeding direction;
said shaft (30) of said at least one set of driven pulleys (20) being designed to rotate in the same direction as rotation of the driven pulleys (20) **characterized in that** said shaft (30) of said at least one set of driven pulleys (20) is connected to second motor means (40).

2. Machine (12) according to claim 1, **characterized in that** said second motor means comprise an electric motor (40) for each shaft (30) of said sets of driven pulleys (20).

3. Machine (12) according to claim 1, **characterized in that** said second motor means (40) and said first motor means comprise only one motor designed to move both a first shaft (28) of said set of driving pulleys (18) and the shaft (30) of each at least one set of driven pulleys (20).

4. Machine (12) according to claim 3, **characterized in that** one of the driven pulleys (20) of each at least one set of driven pulleys (20) is keyed onto the shaft (30) so as not to slide with respect thereto, said driven pulley (20) being designed to transfer the rotational movement to the shaft (30), said cutting wires (16) being designed to transmit the movement between the first shaft (28) and the shaft (30) of each at least one set of driven pulleys (20).

5. Machine (12) according to claim 3, **characterized in that** the rotational movement between first shaft (28) and each second shaft (30) of said at least one set of driven pulleys (20) is transferred by means of a drive belt.

6. Machine (12) according to any one of the preceding claims, **characterized in that** the at least one second shaft (30) is rotated at such a speed that the peripheral speed of the individual driven pulleys (20) is substantially the same as the travel speed of the diamond wires (16).

7. Machine (12) according to any one of the preceding claims, **characterized in that** the driven pulleys (20) are mounted on the shaft (30) by means of sliding bearings (50).

8. Machine (12) according to the preceding claim, **characterized in that** said sliding bearings (50) are made of plastic material.

9. Machine (12) according to either one of claims 7 and 8, **characterized in that** said sliding bearings (50) have an L-shaped radial cross-section.

10. Machine (12) according to any one of the preceding claims, **characterized in that** the driven pulleys (20) are mounted on the shaft (30) by means of friction bearings.

11. Machine (12) according to any one of claims 7 to 10, **characterized in that** the shaft (30) of the at least one set of driven pulleys (20) is hollow and has radial holes (56) for fluid connection between the inside of shaft (30) and the sliding bearing (50).

12. Machine (12) according to any one of claims 1 to 6, **characterized in that** the driven pulleys (20) are mounted on the shaft (30) by means of rolling bearings (58).

## Patentansprüche

1. Maschine (12) zum Schneiden von Blöcken aus Steinmaterial (14) in Platten anhand von Schneidedrähten (16), umfassend:
- einen Rahmen (22), auf welchem die folgenden Elemente drehbar angebracht sind:
- ein Satz von Antriebsscheiben (18), die durch ein erstes Motormittel gedreht werden,
- zumindest ein Satz von angetriebenen Scheiben (20), die auf einer Welle (30) angebracht sind, wobei der Satz angetriebener Scheiben (20) angetriebene oder leerlaufende Scheiben (20) umfasst, die anhand von Gleitlagern, Reiblagern, oder Wälzlagern unabhängig und drehbar an der Welle (30) angebracht sind,
- Schneidedrähte (16)
- Mittel (36) zum Variieren der Spannung jedes Schneidedrahts (16), umfassend Leerlaufscheiben (38), über welche sich die Schneidedrähte (16) bewegen; und
- Mittel zum Bewirken einer Relativbewegung zwischen dem Block und den Schneidedrähten (16) in der Schneidevorschubrichtung;
wobei die Welle (30) des wenigstens einen Satzes angetriebener Scheiben (20) so ausgeführt ist, dass sie in der gleichen Richtung wie die Drehung der angetriebenen Scheiben (20) dreht, **dadurch gekennzeichnet, dass** die Welle (30) des wenigstens einen Satzes angetriebener Scheiben (20) mit einem zweiten Motormittel (40) verbunden ist.

2. Maschine (12) gemäß Anspruch 1, **dadurch gekennzeichnet, dass** das zweite Motormittel einen elektrischen Motor (40) für jede Welle (30) des Satzes angetriebener Scheiben (20) umfasst.

3. Maschine (12) gemäß Anspruch 1, **dadurch gekennzeichnet, dass** das zweite Motormittel (40) und das erste Motormittel lediglich einen Motor umfassen, der so ausgeführt ist, dass er sowohl eine erste Welle (28) des Satzes von Antriebsscheiben (18) als auch die Welle (30) des wenigstens einen Satzes angetriebener Scheiben (20) bewegt.

4. Maschine (12) gemäß Anspruch 3, **dadurch gekennzeichnet, dass** eine der angetriebenen Scheiben (20) des wenigstens einen Satzes angetriebener Scheiben (20) solchermaßen auf die Welle (30) gepasst ist, dass sie nicht in Bezug auf diese gleitet, wobei die angetriebene Scheibe (20) so ausgeführt ist, dass sie die Drehbewegung auf die Welle (30) überträgt, wobei die Schneidedrähte (16) so ausgeführt sind, dass sie die Bewegung zwischen der ersten Welle (28) und der Welle (30) des wenigstens einen Satzes angetriebener Scheiben (20) übertragen.

5. Maschine (12) gemäß Anspruch 3, **dadurch gekennzeichnet, dass** die Drehbewegung zwischen der ersten Welle (28) und der zweiten Welle (30) des wenigstens einen Satzes angetriebener Scheiben (20) mithilfe eines Antriebsriemens übertragen wird.

6. Maschine (12) gemäß einem der vorhergehenden Ansprüche, **dadurch gekennzeichnet, dass** die wenigstens eine zweite Welle (30) mit einer solchen Geschwindigkeit gedreht wird, dass die Umfangsgeschwindigkeit der einzelnen angetriebenen Scheiben (20) im Wesentlichen die gleiche ist wie die Bewegungsgeschwindigkeit der Diamantdrähte (16).

7. Maschine (12) gemäß einem der vorhergehenden Ansprüche, **dadurch gekennzeichnet, dass** die angetriebenen Scheiben (20) auf der Welle (30) mithilfe von Gleitlagern (50) angebracht sind.

8. Maschine (12) gemäß dem vorhergehenden Anspruch, **dadurch gekennzeichnet, dass** die Gleitlager (50) aus einem Plastikmaterial hergestellt sind.

9. Maschine (12) gemäß einem der Ansprüche 7 oder 8, **dadurch gekennzeichnet, dass** die Gleitlager (50) einen L-förmigen radialen Querschnitt besitzen.

10. Maschine (12) gemäß einem der vorhergehenden Ansprüche, **dadurch gekennzeichnet, dass** die angetriebenen Scheiben (20) an der Welle (30) mithilfe von Reiblagern angebracht sind.

11. Maschine (12) gemäß einem der Ansprüche 7 bis 10, **dadurch gekennzeichnet, dass** die Welle (30) des wenigstens einen Satzes angetriebener Scheiben (20) hohl ist und radiale Löcher (56) für eine Fließverbindung zwischen dem Inneren der Welle (30) und dem Gleitlager (50) besitzt.

12. Maschine (12) gemäß einem der Ansprüche 1 bis 6, **dadurch gekennzeichnet, dass** die angetriebenen Scheiben (20) an der Welle (30) mithilfe von Wälzlagern (58) angebracht sind.

## Revendications

1. Machine (12) pour couper des blocs de matériau de pierre (14) en dalles au moyen de fils de coupe (16) comprenant :
un bâti (22) sur lequel les éléments suivants sont montés en rotation :
un ensemble de poulie motrices (18) entrainées en rotation par des premiers moyens moteurs,
au moins un ensemble de poulies menées (20) montées sur un arbre (30), ledit ensemble de poulies menées (20) comprenant des poulies menées ou folles (20) montées indépendamment et en rotation sur ledit arbre (30), au moyen de paliers coulissants, de paliers à friction ou de paliers roulants,
des fils de coupe (16),
des moyens (36) pour modifier la tension de chaque fil de coupe (16), comprenant des poulies folles (38) sur lesquelles les fils de coupe (16) se déplacent ; et
des moyens pour produire un mouvement relatif entre le bloc et les fils de coupe (16), dans la direction d'alimentation de coupe ;
ledit arbre (30) dudit au moins un ensemble de poulies menées (20) étant conçu pour tourner dans la même direction que la rotation des poulies menées (20), **caractérisée en ce que** ledit arbre (30) dudit au moins un ensemble de poulies menées (20) est raccordé aux seconds moyens moteurs (40).

2. Machine (12) selon la revendication 1, **caractérisée en ce que** lesdits seconds moyens moteurs comprennent un moteur électrique (40) pour chaque arbre (30) desdits ensembles de poulies menées.

3. Machine (12) selon la revendication 1, **caractérisée en ce que** lesdits seconds moyens moteurs (40) et lesdits premiers moyens moteurs comprennent uniquement un moteur conçu pour déplacer à la fois un premier arbre (28) dudit ensemble de poulies motrices (18) et l'arbre (30) de chacune d'au moins un ensemble de poulies menées (20).

4. Machine (12) selon la revendication 3, **caractérisée en ce que** l'une des poulies menées (20) de chaque au moins un ensemble de poulies menées (20) est clavettée sur l'arbre (30) afin de ne pas glisser par rapport à ce dernier, ladite poulie menée (20) étant conçue pour transférer le mouvement de rotation à l'arbre (30), lesdits fils de coupe (16) étant conçus pour transmettre le mouvement entre le premier arbre (28) et l'arbre (30) de chaque au moins un ensemble de poulies menées (20).

5. Machine (12) selon la revendication 3, **caractérisée en ce que** le mouvement de rotation entre le premier arbre (28) et chaque second arbre (30) dudit au moins un ensemble de poulies menées (20) est transféré au moyen d'une courroie d'entraînement.

6. Machine (12) selon l'une quelconque des revendications précédentes, **caractérisée en ce que** le au moins un second arbre (30) est entraîné en rotation à une vitesse telle que la vitesse périphérique des poulies menées (20) individuelles est sensiblement la même que la vitesse de déplacement des fils diamants (16).

7. Machine (12) selon l'une quelconque des revendications précédentes, **caractérisée en ce que** les poulies menées (20) sont montées sur l'arbre (30) au moyen de paliers coulissants (50).

8. Machine (12) selon l'une quelconque des revendications précédentes, **caractérisée en ce que** lesdits paliers coulissants (50) sont réalisés à partir de matière plastique.

9. Machine (12) selon l'une ou l'autre des revendications 7 et 8, **caractérisée en ce que** lesdits paliers coulissants (50) ont une section transversale radiale en forme de L.

10. Machine (12) selon l'une quelconque des revendications précédentes, **caractérisée en ce que** les poulies menées (20) sont montées sur l'arbre (30) au moyen de paliers à friction.

11. Machine (12) selon l'une quelconque des revendications 7 à 10, **caractérisée en ce que** l'arbre (30) du au moins un ensemble de poulies menées (20) est creux et a des trous radiaux (56) pour le raccordement de fluide entre l'intérieur de l'arbre (30) et le palier coulissant (50).

12. Machine (12) selon l'une quelconque des revendications 1 à 6, **caractérisée en ce que** les poulies menées (20) sont montées sur l'arbre (30) au moyen de paliers roulants (58).
